# EUROPEAN PATENT APPLICATION

(11) **EP 4 667 666 A1**
(43) Date of publication of application: **24.12.2025**
(21) Application number: 24183322.7
(22) Date of filing: 20.06.2024
(51) Int. Cl.: E02F 9/24, E02F 9/26

(54) **MATERIAL ANALYSIS FOR CONSTRUCTION VEHICLES**

(71) Applicant: Volvo Construction Equipment AB, 631 85 Eskilstuna (SE)
(72) Inventor: BRATTBERG, Björn, 644 33 TORSHÄLLA (SE); LAINE, Leo, 414 84 GÖTEBORG (SE)
(74) Representative: Ström & Gulliksson AB

(57) **Abstract**

A computer system (114, 500) comprising processing circuitry (502) configured to acquire subsurface scanning data relating to structural properties of a pile (106) of material (104) of a construction environment (100), and analyse the subsurface scanning data to evaluate the contents of the pile (106) of material (104), determine an action for a construction vehicle (102) configured to operate in the construction environment (100) based on the analysis, and determine a control input for controlling the construction vehicle (102) to perform the determined action.

## Description

### TECHNICAL FIELD

The disclosure relates generally to vehicle control. In particular aspects, the disclosure relates to material analysis for construction vehicles. The disclosure can be applied in construction equipment and vehicles, such as excavators, loaders and articulated haulers. Although the disclosure may be described with respect to a particular vehicle, the disclosure is not restricted to any particular vehicle.

### BACKGROUND

Construction vehicles that are manoeuvred in a construction environment are often subjected to uncertain conditions, in particular relating to the structural properties a pile of material to be excavated. For example, objects hidden in a pile of material may be detrimental to the construction vehicle during a bucket-filling situation due to the size, material, density, or the like of the object. It is often necessary to rely on the experience of a vehicle operator to avoid these issues.

It is therefore desired to develop a solution for control of construction vehicles that addresses or at least mitigates some of these issues.

### SUMMARY

This disclosure provides systems, methods and other approaches for analysing a pile of material of a construction environment for a construction vehicle and determining an appropriate action. In particular, subsurface scanning data relating to structural properties of a pile of material is acquired. The subsurface scanning data is analysed to evaluate the contents of the pile. Based on the analysis, an action for the construction vehicle is determined. A control input for controlling the construction vehicle to perform the determined action is also determined.

According to a first aspect of the disclosure, there is provided a computer system comprising processing circuitry configured to acquire subsurface scanning data relating to structural properties of a pile of material of a construction environment, analyse the subsurface scanning data to evaluate the contents of the pile of material, determine an action for a construction vehicle configured to operate in the construction environment based on the analysis, and determine a control input for controlling the construction vehicle to perform the determined action.

The first aspect of the disclosure may seek to provide a computer system that can identify risks relating to the structural properties of a pile of material, for example objects hidden in the pile, in a non-destructive and non-invasive manner, and control a construction vehicle accordingly. The safety and efficiency of the construction vehicle can therefore be increased, especially in the case of automated construction vehicles where experience of a vehicle operator cannot be relied upon.

Optionally in some examples, including in at least one preferred example, the processing circuitry is configured to acquire the subsurface scanning data from a ground penetrating radar system. A technical benefit may include that a variety of useful and high-resolution subsurface scanning data can be acquired that enables a thorough analysis of the pile of material to be performed.

Optionally in some examples, including in at least one preferred example, the subsurface scanning data comprises one or more of phase shift information, signal strength information, and frequency information. A technical benefit may include that a number of different structural properties of the pile of material can be determined, enabling determination of an appropriate action.

Optionally in some examples, including in at least one preferred example, the processing circuitry is configured to analyse the subsurface scanning data by determining one or more structural properties of the pile of material from the subsurface scanning data. A technical benefit may include that a number of different structural properties of the pile of material can be determined, enabling determination of an appropriate action.

Optionally in some examples, including in at least one preferred example, the structural properties of the pile of material comprise one or more of a density of material in the pile, a material type of material in the pile, and a lump size of material in the pile. A technical benefit may include that a different actions can be determined based on the different conditions of the pile, in order that the material may be handled and the vehicle may be operated in a safe and efficient manner appropriate to the material conditions in a construction environment.

Optionally in some examples, including in at least one preferred example, the determined action comprises controlling a trajectory of a bucket of the construction vehicle. A technical benefit may include that a bucket of a construction vehicle can be controlled in an appropriate manner based on the structural properties of the material in the pile. This can avoid damage to the bucket and ensure efficient operation.

Optionally in some examples, including in at least one preferred example, the determined action comprises collecting a load of material from the pile using a bucket of the construction vehicle. A technical benefit may include that material may be collected by the bucket in an efficient manner without causing damage to the bucket or the rest of the construction vehicle.

Optionally in some examples, including in at least one preferred example, the determined action comprises avoiding an object detected in the pile of material. A technical benefit may include that the construction vehicle may be operated without causing damage to the bucket or the rest of the vehicle due to interaction with previously unknown or hidden objects.

Optionally in some examples, including in at least one preferred example, the determined action comprises controlling a position of the construction vehicle and/or a speed of the construction vehicle. A technical benefit may include that the construction vehicle may be operated in a safe and efficient manner appropriate to the material conditions in a construction environment.

Optionally in some examples, including in at least one preferred example, the determined action comprises transmitting the acquired subsurface scanning data for use in creating a map of the construction environment. A technical benefit may include that safer and/or more efficient navigation is enabled in the construction environment.

Optionally in some examples, including in at least one preferred example, the processing circuitry is further configured to acquire second subsurface scanning data relating to structural properties of the ground of the construction environment, analyse the second subsurface scanning data to evaluate one or more of the load bearing capability, the particle density, or friction conditions of the ground, determine a second action for the construction vehicle based on the analysis, and determine a control input for controlling the construction vehicle to perform the determined second action. A technical benefit may include that conditions of the ground on which a construction vehicle may travel when operating in a construction environment can be considered and an appropriate action can be taken accordingly.

According to a second aspect of the disclosure, there is provided a vehicle comprising the computer system of any preceding claim. The second aspect of the disclosure may seek to provide a vehicle capable of identifying risks relating to the structural properties of a pile of material, for example objects hidden in the pile, and to be controlled accordingly. The safety and efficiency of the construction vehicle can therefore be increased.

According to a third aspect of the disclosure, there is provided a computer-implemented method comprising acquiring, by processing circuitry of a computer system, subsurface scanning data relating to structural properties of a pile of material of a construction environment, analysing, by the processing circuitry, the subsurface scanning data to evaluate the contents of the pile of material, determining, by the processing circuitry, an action for a construction vehicle configured to operate in the construction environment based on the analysis, and determining, by the processing circuitry, a control input for controlling the construction vehicle to perform the determined action.

The third aspect of the disclosure may seek to provide a computer-implemented method that can identify risks relating to the structural properties of a pile of material, for example objects hidden in the pile, in a non-destructive and non-invasive manner, and control a construction vehicle accordingly. The safety and efficiency of the construction vehicle can therefore be increased, especially in the case of automated construction vehicles where experience of a vehicle operator cannot be relied upon.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to identify risks relating to the structural properties of a pile of material, for example objects hidden in the pile, and to control a construction vehicle accordingly.

According to a fifth aspect of the disclosure, there is provided a non-transitory computer-readable storage medium comprising instructions, which when executed by processing circuitry, cause the processing circuitry to perform the computer-implemented method of the third aspect. The fourth fifth of the disclosure may seek to enable new vehicles and/or legacy vehicles to be conveniently configured, by software installation/update, to identify risks relating to the structural properties of a pile of material, for example objects hidden in the pile, and to control a construction vehicle accordingly.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates a construction vehicle operating in a construction environment according to an example of the disclosure.
**FIG. 2** is a flow chart of a computer-implemented method according to an example of the disclosure.
**FIG. 3** illustrates a construction vehicle operating in a construction environment according to an example of the disclosure.
**FIG. 4** is a flow chart of a computer-implemented method according to an example of the disclosure.
**FIG. 5** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

Construction vehicles that are manoeuvred in a construction environment are often subjected to uncertain conditions, in particular relating to the structural properties a pile of material to be excavated. For example, objects hidden in a pile of material may be detrimental to the construction vehicle during a bucket-filling situation due to the size, material, density, or the like of the object. It is often necessary to rely on the experience of a vehicle operator to avoid these issues.

To remedy this, systems and methods are proposed for analysing a pile of material of a construction environment for a construction vehicle and determining an appropriate action. In particular, subsurface scanning data relating to structural properties of a pile of material is acquired. The subsurface scanning data is analysed to evaluate the contents of the pile. Based on the analysis, an action for the construction vehicle is determined. A control input for controlling the construction vehicle to perform the determined action is also determined. In this way, it is possible to identify risks relating to the structural properties of a pile of material, for example objects hidden in the pile, and to control the construction vehicle accordingly. The safety and efficiency of the construction vehicle can therefore be increased.

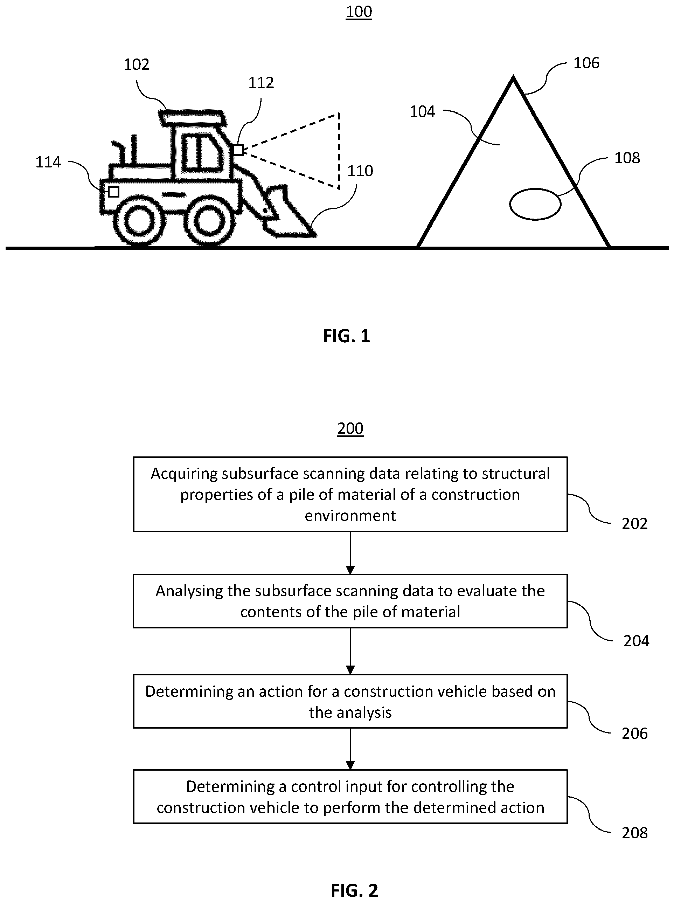

**FIG. 1** illustrates a construction vehicle **102** operating in a construction environment **100**. The construction environment **100** may be a construction site such as for residential, commercial, institutional, or industrial buildings, an infrastructure construction area such as for roads, railways, bridges, and tunnels, an environmental construction area such as for land reclamation or pollution control, or any other construction environment known in the art.

The construction environment **100** is a site where material **104** can be deposited. For example, material may be deposited in one or more piles **106** in the construction environment **100**. The material **104** may be waste or debris, for example from a construction site. The material **104** be a bulk material. Bulk materials are dry materials that are generally powdery, granular or lumpy in nature. Examples of such materials include loose materials such as mineral, ore, coal, woodchips, sand, gravel, clay, cement, ash, or stone. It will be appreciated that any other bulk material that can be moved from one location to another may be considered part of the present disclosure. A pile **106** of material **104** may comprise one or more objects 108, as will be discussed below.

The construction vehicle **102** may be any vehicle suitable for transporting bulk material from one location to another. For example, the vehicle may be an excavator, loader, articulated hauler, dump truck, or any other suitable vehicle known in the art. In particular, the construction vehicle **102** may have a bucket or tool **110** capable of collecting material **104**. The construction vehicle **102** may also have a scanning system **112**, such as a ground penetrating radar system, as will be discussed below. In some embodiments, the construction vehicle **102** may be driven by an operator. In other embodiments, the construction vehicle **102** may be an autonomous vehicle that is controlled by a vehicle motion management (VMM) unit **114** configured to control vehicle units and/or vehicle axles and/or wheels of the construction vehicle **102** individually.

The construction vehicle **102** may be manoeuvred in the construction environment **100** to collect and deposit material **104**. In some cases, the structural properties a pile **106** of material **104** may be unknown. For example, the density, material type, or a lump size of material **104** in a pile **106** may be unknown, and one or more objects **108** may be hidden in the pile **106**. The one or more objects **108** may have a size, material type, density, etc. that may be detrimental to the construction vehicle **102** during a collection operation. The construction vehicle **102** may be operated by an operator such as a driver, or may be an autonomous or "self-driving" construction vehicle.

**FIG. 2** is a flow chart of a computer-implemented method **200** according to an example. The method **200** is for controlling a construction vehicle, such as the construction vehicle **102**, to operate in a construction environment, such as the construction environment **100**. The method **200** enables risks relating to the structural properties of a pile of material, for example objects hidden in the pile, to be identified and enable the construction vehicle to be controlled accordingly. The method **200** may be implemented by processing circuitry of a computer system (e.g., the VMM unit **114**).

At **202**, subsurface scanning data relating to structural properties of a pile **106** of material **104** of a construction environment **100** is acquired. The subsurface scanning data may include various types of information that describes the structural properties of the scanned pile **106**. For example, the subsurface scanning data may comprise one or more of phase shift information, signal strength information, signal velocity information, signal attenuation information, signal impedance information, polarisation information, and frequency information. The subsurface scanning data may also comprise distance and/or scale information indicating the dimensions of the area that has been scanned. In some examples, the subsurface scanning data may include a visual representation of the scanned area of the construction environment **100**.

The subsurface scanning data may be acquired by any suitable apparatus. In some examples, a scanning system **112** of a construction vehicle **102** may be used to acquire the scanning data. In such an example, the construction vehicle **102** may approach the pile **106** to within a range of the scanning system **112** and the scanning system **112** may be activated to acquire the scanning data. The scanning system **112** may be activated by an operator of the construction vehicle **102** or may be activated automatically when the construction vehicle **102** reaches a threshold distance from the pile **106**.

The scanning system **112** may be any suitable scanning system for acquiring information scanning data relating to structural properties of a pile **106** of material **104**. For example, the scanning system **112** may use one or more thermal, acoustic, seismic, magnetic, or electro-magnetic approaches to acquire the subsurface scanning data. In one example, the scanning system **112** is a ground penetrating radar (GPR) system. GPR is a type of radar system that sends electromagnetic radar pulses into the ground, for example electromagnetic waves with a frequency band from 10 MHz to 1 GHz, which interact with and bounce back from various substances in unique ways. The scanning system **112** may be configurable dependent on the application at hand. For example, the wavelength of radar pulses may be adjusted to take account of different material types in different environments. In some examples, the scanning system **112** may be able to acquire information at different depths and/or distances, for example in a two-dimensional manner in the form of one or more data slices or in a three-dimensional manner.

At **204**, the subsurface scanning data is analysed to evaluate the contents of the pile **106** of material **104**. For example, one or more structural properties of the pile **106** of material **104** may be determined from the subsurface scanning data. This enables any risks relating to the structural properties of a pile **106** of material **104** to be identified, for example the presence objects hidden in the pile **106**.

In one example, the density of material **104** in the pile **106** may be determined, for example from signal strength information in the subsurface scanning data. For example, the subsurface scanning system may directly present density information based on a signal strength received from the material **104** in the pile **106**. For example, rock may have a density in a range of 1600 kg/m³ to 3500 kg/m³, while soil may have a density in a range of 1000 kg/m³ to 1500 kg/m³. In another example, a type of material **104** in the pile **106** may be determined, for example from frequency information in the subsurface scanning data. For example, the subsurface scanning system may comprise frequency information that is dependent on the natural frequency of a material, allowing different types of material to be determined. This can allow the homogeneity of the pile **106**, for example the presence of different types of material **104** in the pile **106**, to be determined. In another example, a lump size of the material **104** in the pile **106** may be determined. This may be determined based on the density and frequency information as discussed above, as well as distance and scale information included in the subsurface scanning data. In another example, a hardness of material **104** in the pile **106**, in particular any objects **108** identified in the pile **106,** may be determined. This may be determined based on signal attenuation information included in the subsurface scanning data, as harder objects may exhibit higher attenuation. In another example, a size, position, and/or orientation of any objects **108** identified in the pile **106** may be determined. This may be determined based on distance, scale, signal strength, and/or frequency information included in the subsurface scanning data, or based on knowledge of a scanning depth at which the scanning system **112** operates. The position of the pile **106** can also be determined, for example based on position data (e.g. GPS data) associated with the subsurface scanning data.

At **206**, an action for a construction vehicle **102** operating in the construction environment **100** is determined based on the analysis at **204**. For example, the analysis may indicate that the pile **106** of material **104** is safe to excavate based on a sufficiently high homogeneity of material **104** in the pile **106.** Alternatively, an object **108** may be identified in the pile **106**, making it unsafe for excavation.

In one example, the determined action comprises controlling a trajectory of a bucket **110** of the construction vehicle **102**. For example, the determined action may comprise collecting a load of material **104** from the pile **106** using a bucket **110** of the construction vehicle **102**. Based on knowledge of the contents of the pile **106**, the trajectory and speed of the bucket **110** can be adapted to improve filling, for example providing an appropriate bucket-filling volume or bucket-filling speed. This can increase the efficiency and/or safety of operation of the construction vehicle **102** and reduce wear of the construction vehicle **102** and its components. In another example, the determined action may comprise avoiding an object **108** detected in the pile **106** of material **104**. For example, if an object **108** is identified in the pile **106** having properties (e.g. size, hardness, position, homogeneity) that render it unsuitable for excavation, the trajectory of the bucket **110** can be adapted to avoid the object **108**. The size, position, and/or orientation of an objects **108** may be determined, meaning the object can be handed appropriately. This may be especially useful when a large object is partially exposed at the edge of the pile, but its full form is not discernible by a human operator or a camera.

In another example, the determined action comprises controlling a position of the construction vehicle **102**. For example, the position of the construction vehicle **102** relative to the pile **106** will affect the balance of the construction vehicle **102** when collecting a load of material **104** from the pile **106**. Therefore, based on the structural properties of the pile **106** (e.g. the density of material **104** or presence/size of any objects **108**), the position of the construction vehicle **102** relative to the pile **106** can be adjusted to ensure safe bucket-filling.

In another example, the determined action comprises controlling a speed of the construction vehicle **102**. For example, the speed of the construction vehicle **102** when transporting material **104** from the pile **106** will affect the stability of the construction vehicle **102**. Therefore, based on the structural properties of the pile **106** (e.g. the density of material **104** or presence/size of any objects **108**), the speed of the construction vehicle **102** can be adjusted to ensure safe and stable transport.

In another example, the determined action comprises transmitting the acquired subsurface scanning data for use in creating a map of the construction environment **100**. For example, the location of piles **106** of material **104** and/or the structural properties of the piles **106** can be of interest to other parties operating in the construction environment **100**. A map of such information may be useful for classification of materials in the construction environment **100** and for enabling safer and/or more efficient navigation in the construction environment **100**. The map may be stored in a memory associated with the construction vehicle **102**, a memory associated with a central computer system of the construction environment **100** (e.g. a cloud-based memory), or may be distributed to other vehicles and or operators that are active in the construction environment **100**.

At **208**, a control input is determined for controlling the construction vehicle **102** to perform the action determined at **206**. For example, the control input may include a speed and/or direction input defining a trajectory of a bucket **110** of the construction vehicle **102**, a speed and/or direction input relating to the construction vehicle **102** itself, and/or a message relating to transmission of the acquired subsurface scanning data.

The method **200** enables risks relating to the structural properties of a pile of material in a construction environment to be assessed. For example, objects hidden in the pile may be identified. A construction vehicle operating in the construction environment can then be controlled accordingly. The safety and efficiency of the construction vehicle can therefore be increased.

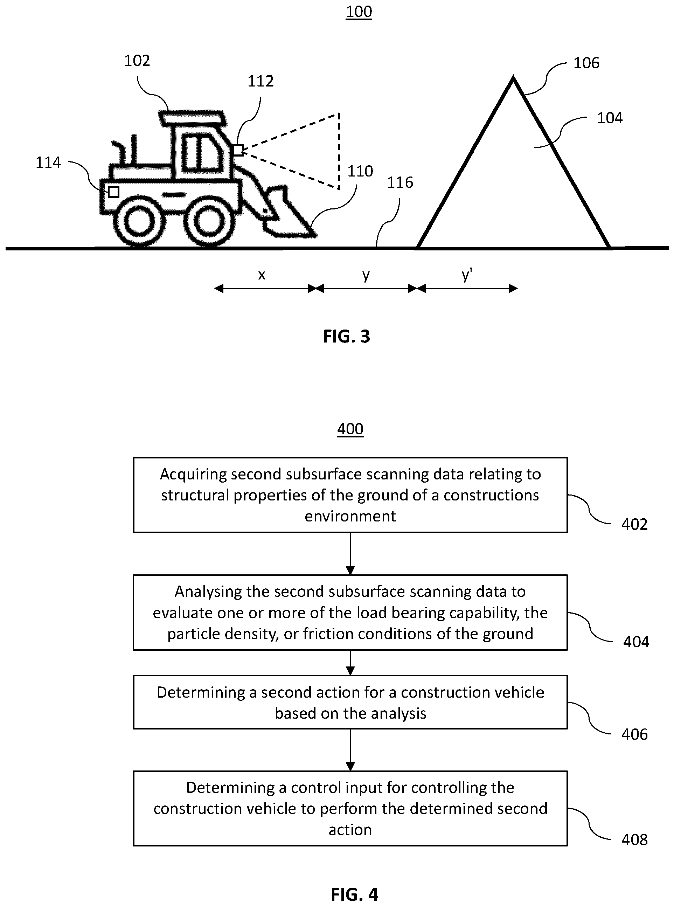

**FIG. 3** illustrates another example of a construction vehicle **102** operating in a construction environment **100**. The construction environment **100** and construction vehicle **102** may be substantially the same as described in relation to **FIG. 1**. As discussed above, the construction vehicle **102** may be manoeuvred in the construction environment **100** to collect and deposit material **104**, for example from a pile **106**. As shown in **FIG. 3**, there may be a distance x between the tip of the bucket **110** and the centre of a wheel of the construction vehicle **102**. At a given moment, there may be a distance y between the construction vehicle **102** and the pile **106**.

The ground **116** on which the construction vehicle **102** travels may have structural properties that affect how the construction vehicle **102** will behave when moving. For example, one or more of the load bearing capability, the particle density, or friction conditions of the ground may affect motion of the construction vehicle **102**. In some cases, these structural properties may be unknown.

**FIG. 4** is a flow chart of a computer-implemented method **400** according to an example. The method **400** is for controlling a construction vehicle, such as the construction vehicle **102**, to operate in a construction environment, such as the construction environment **100.** The method **400** enables properties of the ground **116** on which the construction vehicle **102** travels to be determined and for the construction vehicle **102** to be controlled accordingly. The method **400** may be implemented by processing circuitry of a computer system (e.g., the VMM unit **114)**. The method **400** may be implemented separately from or in addition to the computer-implemented method **200** of **FIG. 2**.

At **402**, subsurface scanning data relating to structural properties of the ground **116** of the construction environment **100** is acquired. The subsurface scanning data may include various types of information that describes the structural properties of the ground **116**. For example, the subsurface scanning data may comprise one or more of phase shift information, signal strength information, signal velocity information, signal attenuation information, signal impedance information, polarisation information, and frequency information. The subsurface scanning data may be acquired by any suitable apparatus. In some examples, the scanning system **112** of a construction vehicle **102** may be used to acquire the scanning data, as discussed above. The scanning system **112** may be any suitable scanning system for example a GPR system.

At **404**, the subsurface scanning data is analysed to evaluate one or more of the load bearing capability, the particle density, or friction conditions of the ground 116. For example, one or more structural properties of the ground **116** may be determined from the subsurface scanning data. This enables any risks relating to the structural properties of the ground **116** to be identified.

In one example, the load bearing capability of the ground **116** may be determined. In another example, the particle density of the ground **116** may be determined. The load bearing capability may be determined based on the particle density of the ground **116**, for example by determining a level of compactness of the ground **116**. A level of compactness may also be dependent on the type of material of the ground **116**. The load bearing capability may be expressed as a level or grade indicating different levels of compactness. In another example, friction conditions of the ground **116** may be determined. The friction conditions may include slip conditions relating to any slip that may be caused on the wheels of the construction vehicle **102**.

At **406**, an action for a construction vehicle **102** operating in the construction environment **100** is determined based on the analysis at **404**. For example, the analysis may indicate that the ground **116** is safe to travel on due to a sufficiently high load bearing capacity. In some examples, the analysis may produce a level or grade indicating different levels of load bearing capability. Alternatively, analysis may indicate that the ground **116** is unsafe to travel on due to a low load bearing capacity.

In one example, the determined action comprises avoiding a specific section of ground **116**. For example, if it is determined at **404** that a particular section of ground **116** is unsafe to travel on due to a low load bearing capacity, the trajectory of construction vehicle **102** can be adapted to avoid that section.

In another example, the determined action comprises compacting the ground **116**. For example, if it is determined at **404** that a particular section of ground **116** is unsafe to travel on due to a low load bearing capacity, the trajectory of the bucket **110** can be controlled to compress that section of ground. In such an example, a compression force provided by the bucket **110** may be provided such that the load bearing capacity of the section of ground **116** is increased, and/or that slip on the wheels of the construction vehicle **102** is reduced. In one example, the compacting operation may be performed over the distance y to enable the construction vehicle **102** to approach the pile **106** in a safe and stable manner.

In another example, the determined action may comprise collecting a load of material **104** from a pile **106** using a bucket **110** of the construction vehicle **102**. For example, if it is determined at **404** that a section of ground **116** ahead of a pile **106** is safe to travel on due to a sufficiently high load bearing capacity, the trajectory of construction vehicle **102** can be controlled to approach the pile **106**, and the trajectory of the bucket **110** can be controlled to collect a load of material **104** from the pile **106**. In one example, the trajectory of the bucket **110** can be adapted so that the bucket **110** penetrates the pile **106** by a distance y'. The trajectory of the bucket **110** and the distance y' may be determined based on factors such as material type, fuel efficiency of a loading manoeuvre, moment on the construction vehicle **102**, and/or angle of repose of the pile **106**.

In another example, the determined action comprises transmitting the acquired subsurface scanning data for use in creating a map of the construction environment **100**. This may be performed substantially as discussed above in relation to the method **200**. For example, the location of unstable sections of ground **116**, for example having low load bearing capacity, low density, or high slip, can be of interest to other parties operating in the construction environment **100**. A map of such information may be useful for enabling safer and/or more efficient navigation in the construction environment **100**. In examples where the analysis produces a level or grade indicating different levels of load bearing capability, it may be determined that certain areas of the construction environment **100** have sufficient load bearing capability to be used as a road or track, either by directing vehicles to travel on those areas, or actively building a road in those areas, for example using a construction vehicle **102** having a scraper to prepare the surface.

At **408**, a control input is determined for controlling the construction vehicle **102** to perform the action determined at **406**. For example, the control input may include a speed and/or direction input defining a trajectory of a bucket **110** of the construction vehicle **102**, a speed and/or direction input relating to the construction vehicle **102** itself, and/or a message relating to transmission of the acquired subsurface scanning data.

The method **400** enables risks relating to the structural properties of the ground on which a construction vehicle travels to be assessed. For example, unstable sections of ground may be identified. A construction vehicle operating in the construction environment can then be controlled accordingly. The safety and efficiency of the construction vehicle can therefore be increased.

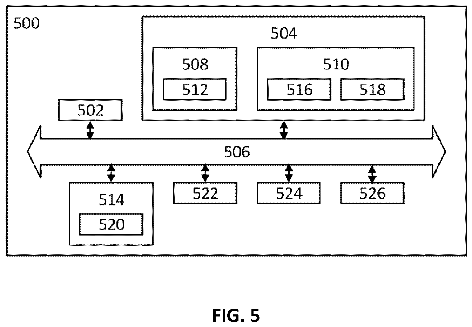

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504**, and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504**. The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500**.

The computer system **500** may further include or be coupled to a non-transitory computer-readable storage medium such as the storage device **514**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510**, which may include an operating system **516** and/or one or more program modules **518**. All or a portion of the examples disclosed herein may be implemented as a computer program **520** stored on a transitory or non-transitory computer-usable or computer-readable storage medium (e.g., single medium or multiple media), such as the storage device **514**, which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A computer system (114, 500) comprising processing circuitry (502) configured to: acquire subsurface scanning data relating to structural properties of a pile (106) of material (104) of a construction environment (100); analyse the subsurface scanning data to evaluate the contents of the pile (106) of material (104); determine an action for a construction vehicle (102) configured to operate in the construction environment (100) based on the analysis; and determine a control input for controlling the construction vehicle (102) to perform the determined action.
Example 2: The computer system (114, 500) of example 1, wherein the processing circuitry (502) is configured to acquire the subsurface scanning data from a ground penetrating radar system (112).
Example 3: The computer system (114, 500) of example 1 or 2, wherein the subsurface scanning data comprises one or more of phase shift information, signal strength information, and frequency information.
Example 4: The computer system (114, 500) of any preceding example, wherein the processing circuitry (502) is configured to analyse the subsurface scanning data by determining one or more structural properties of the pile (106) of material (104) from the subsurface scanning data.
Example 5: The computer system (114, 500) of any preceding example, wherein the structural properties of the pile (106) of material (104) comprise one or more of a density of material (104) in the pile (106), a material type of material (104) in the pile (106), and a lump size of material (104) in the pile (106).
Example 6: The computer system (114, 500) of any preceding example, wherein the determined action comprises controlling a trajectory of a bucket (110) of the construction vehicle (102).
Example 7: The computer system (114, 500) of example 6, wherein the determined action comprises collecting a load of material (104) from the pile using a bucket (110) of the construction vehicle (102).
Example 8: The computer system (114, 500) of example 6 or 7, wherein the determined action comprises avoiding an object (108) detected in the pile of material.
Example 9: The computer system (114, 500) of any preceding example, wherein the determined action comprises controlling a position of the construction vehicle (102) and/or a speed of the construction vehicle (102).
Example 10: The computer system (114, 500) of any preceding example, wherein the determined action comprises transmitting the acquired subsurface scanning data for use in creating a map of the construction environment (100).
Example 11: The computer system (114, 500) of any preceding example, wherein the processing circuitry (502) is further configured to: acquire second subsurface scanning data relating to structural properties of the ground (116) of the construction environment (100); analyse the second subsurface scanning data to evaluate one or more of the load bearing capability, the particle density, or friction conditions of the ground (116); determine a second action for the construction vehicle (102) based on the analysis; and determine a control input for controlling the construction vehicle (102) to perform the determined second action.
Example 12: A vehicle (102) comprising the computer system (114, 500) of any preceding example.
Example 13: A computer-implemented method (200) comprising: acquiring (202), by processing circuitry (502) of a computer system (114, 500), subsurface scanning data relating to structural properties of a pile (106) of material (104) of a construction environment (100); analysing (204), by the processing circuitry (502), the subsurface scanning data to evaluate the contents of the pile (106) of material (104); determining (206), by the processing circuitry (502), an action for a construction vehicle (102) configured to operate in the construction environment (100) based on the analysis; and determining (208), by the processing circuitry (502), a control input for controlling the construction vehicle (102) to perform the determined action.
Example 14: The computer-implemented method (200) of example 13, comprising acquiring the subsurface scanning data from a ground penetrating radar system (112).
Example 15: The computer-implemented method (200) of example 13 or 14, wherein the subsurface scanning data comprises one or more of phase shift information, signal strength information, and frequency information.
Example 16: The computer-implemented method (200) of any of examples 13 to 15, comprising analysing the subsurface scanning data by determining one or more structural properties of the pile (106) of material (104) from the subsurface scanning data.
Example 17: The computer-implemented method (200) of any of examples 13 to 16, wherein the structural properties of the pile (106) of material (104) comprise one or more of a density of material (104) in the pile (106), a material type of material (104) in the pile (106), and a lump size of material (104) in the pile (106).
Example 18: The computer-implemented method (200) of any of examples 13 to 17, wherein the determined action comprises controlling a trajectory of a bucket (110) of the construction vehicle (102).
Example 19: The computer-implemented method (200) of example 18, wherein the determined action comprises collecting a load of material (104) from the pile using a bucket (110) of the construction vehicle (102).
Example 20: The computer-implemented method (200) of example 18 or 19, wherein the determined action comprises avoiding an object (108) detected in the pile of material.
Example 21: The computer-implemented method (200) of any of examples 13 to 20, wherein the determined action comprises controlling a position of the construction vehicle (102) and/or a speed of the construction vehicle (102).
Example 22: The computer-implemented method (200) of any of examples 13 to 21, wherein the determined action comprises transmitting the acquired subsurface scanning data for use in creating a map of the construction environment (100).
Example 23: The computer-implemented method (200) of any of examples 13 to 22, further comprising: acquiring second subsurface scanning data relating to structural properties of the ground (116) of the construction environment (100); analysing the second subsurface scanning data to evaluate one or more of the load bearing capability, the particle density, or friction conditions of the ground (116); determining a second action for the construction vehicle (102) based on the analysis; and determining a control input for controlling the construction vehicle (102) to perform the determined second action.
Example 24: A computer program product comprising program code for performing, when executed by processing circuitry (502), the computer-implemented method (200) of any of examples 13 to 23.
Example 25: A non-transitory computer-readable storage medium comprising instructions, which when executed by processing circuitry (502), cause the processing circuitry to perform the computer-implemented method (200) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (114, 500) comprising processing circuitry (502) configured to:
acquire subsurface scanning data relating to structural properties of a pile (106) of material (104) of a construction environment (100);
analyse the subsurface scanning data to evaluate the contents of the pile (106) of material (104);
determine an action for a construction vehicle (102) configured to operate in the construction environment (100) based on the analysis; and
determine a control input for controlling the construction vehicle (102) to perform the determined action.

2. The computer system (114, 500) of claim 1, wherein the processing circuitry (502) is configured to acquire the subsurface scanning data from a ground penetrating radar system (112).

3. The computer system (114, 500) of claim 1 or 2, wherein the subsurface scanning data comprises one or more of phase shift information, signal strength information, and frequency information.

4. The computer system (114, 500) of any preceding claim, wherein the processing circuitry (502) is configured to analyse the subsurface scanning data by determining one or more structural properties of the pile (106) of material (104) from the subsurface scanning data.

5. The computer system (114, 500) of any preceding claim, wherein the structural properties of the pile (106) of material (104) comprise one or more of a density of material (104) in the pile (106), a material type of material (104) in the pile (106), and a lump size of material (104) in the pile (106).

6. The computer system (114, 500) of any preceding claim, wherein the determined action comprises controlling a trajectory of a bucket (110) of the construction vehicle (102).

7. The computer system (114, 500) of claim 6, wherein the determined action comprises collecting a load of material (104) from the pile using a bucket (110) of the construction vehicle (102).

8. The computer system (114, 500) of claim 6 or 7, wherein the determined action comprises avoiding an object (108) detected in the pile of material.

9. The computer system (114, 500) of any preceding claim, wherein the determined action comprises controlling a position of the construction vehicle (102) and/or a speed of the construction vehicle (102).

10. The computer system (114, 500) of any preceding claim, wherein the determined action comprises transmitting the acquired subsurface scanning data for use in creating a map of the construction environment (100).

11. The computer system (114, 500) of any preceding claim, wherein the processing circuitry (502) is further configured to:
acquire second subsurface scanning data relating to structural properties of the ground (116) of the construction environment (100);
analyse the second subsurface scanning data to evaluate one or more of the load bearing capability, the particle density, or friction conditions of the ground (116);
determine a second action for the construction vehicle (102) based on the analysis; and
determine a control input for controlling the construction vehicle (102) to perform the determined second action.

12. A vehicle (102) comprising the computer system (114, 500) of any preceding claim.

13. A computer-implemented method (200) comprising:
acquiring (202), by processing circuitry (502) of a computer system (114, 500), subsurface scanning data relating to structural properties of a pile (106) of material (104) of a construction environment (100);
analysing (204), by the processing circuitry (502), the subsurface scanning data to evaluate the contents of the pile (106) of material (104);
determining (206), by the processing circuitry (502), an action for a construction vehicle (102) configured to operate in the construction environment (100) based on the analysis; and
determining (208), by the processing circuitry (502), a control input for controlling the construction vehicle (102) to perform the determined action.

14. A computer program product comprising program code for performing, when executed by processing circuitry (502), the computer-implemented method (200) of claim 13.

15. A non-transitory computer-readable storage medium comprising instructions, which when executed by processing circuitry (502), cause the processing circuitry to perform the computer-implemented method (200) of claim 13.
